# EUROPÄISCHE PATENTANMELDUNG

(11) **EP 3 531 005 A1**
(43) Veröffentlichungstag der Anmeldung: **28.08.2019**
(21) Anmeldenummer: 18000857.5
(22) Anmeldetag: 31.10.2018
(51) Int. Cl.: F16M 11/04, F16M 13/00

(54) **KLEMMBACKENHALTER FÜR SMARTPHONES ODER TABLETS MIT DIEBSTAHLSCHUTZ**

(30) Priorität: 21.02.2018 DE 202018000931 U
(71) Anmelder: Wanzl Metallwarenfabrik GmbH, 89340 Leipheim (DE)
(72) Erfinder: Richter, Harald, 75331 Engelsbrand (DE)

(57) **Zusammenfassung**

Mit Diebstahlschutz ausgestatteter Klemmbackenhalter für Smartphones oder Tablets, mit einem Korpus (1), der eine Auflagefläche für das Smartphone oder Tablet bildet und einen Betätigungsmechanismus aufweist, und mit zwei das Smartphone oder Tablet an zwei gegenüber liegenden Randbereichen ergreifenden und zur formschlüssigen Aufnahme des jeweiligen Randbereichs ausgebildeten Backen (3, 4), von denen mindestens eine Backe (4) zwischen einer Offenstellung und einer variablen Schließstellung beweglich und in der Schließstellung arretierbar ist, und mit einer Auslösetaste (7) zum Entsperren der Arretierung der beweglichen Backe (4) in deren Schließstellung. Weiter ist mindestens ein Stellelement (8, 9) vorgesehen, das zwischen einer Mehrzahl definierter und mit Markierungen versehener Positionen verstellbar ist und das mit einem Schlüsselelement (13) ausgebildet ist, das nur in einer bestimmten Position mit einem komplementären Schlüsselelement (14) der Auslösetaste (7) zusammenwirken kann, um nur in dieser Position eine Betätigung der Auslösetaste zu ermöglichen.

## Beschreibung

Die Erfindung betrifft einen Klemmbackenhalter für Smartphones oder Tablets mit Diebstahlschutz.

Als Klemmbackenhalter ausgebildete Halterungen für Smartphones oder Tablets sind als Universalhalterungen bekannt. Sie halten das Smartphone oder Tablet zwischen zwei relativ zueinander mit relativ großem Verstellweg beweglichen Backen, die entweder an den beiden Seitenrändern oder am oberen und unteren Rand des Smartphones oder Tablets angreifen und aufgrund des Backenverstellwegs zur Aufnahme von Smartphones oder Tablets unterschiedlicher Größe geeignet sind.

Bei solchen Klemmbackenhaltern ist mindestens eine der beiden Backen beweglich und es ist dafür ein Mechanismus vorgesehen, der die bewegliche Backe durch Federkraft in eine geöffnete Stellung vorspannt und bei eingelegtem Gerät das Schließen der Backe durch Druck entgegen der Federkraft bis zur Anlage an das Gerät ermöglicht, wobei ein Ratschenmechanismus die Rückkehr in die geöffnete Stellung sperrt. Durch eine Auslösetaste kann der Ratschenmechanismus entsperrt werden, um die mindestens eine bewegliche Backe in ihre geöffnete Stellung zurückkehren zu lassen.

Bei herkömmlichen Klemmbackenhaltern ist also das Entnehmen des Geräts aus dem Klemmbackenhalter durch jedermann ohne weiteres auf der Stelle möglich, indem einfach die Auslösetaste betätigt wird und sich der Klemmbackenhalter dann öffnet.

Aufgabe der Erfindung ist die Schaffung eines Klemmbackenhalters für Smartphones oder Tablets, der mit einem Diebstahlschutz ausgestattet ist, so dass ein darin gehaltertes Gerät nicht ohne weiteres durch irgendjemand weggenommen werden kann.

Die Erfindung ermöglicht es insbesondere, Einkaufswagen in Supermärkten oder Baumärkten mit Haltern für Smartphones oder Tablets auszustatten, in welche Kunden während des Einkaufs Ihr Smartphone oder Tablet einlegen können, um Einkaufslisten, Materiallisten, Maßlisten oder ähnliches anzuzeigen und so den Einkauf zu erleichtern. Eine weitere Rolle spielt dabei die Möglichkeit interaktiver Werbe- und Beratungsfunktion, wie sie an manchen Verkaufsstätten schon praktiziert wird, wo über Smartphone oder Tablet Werbebotschaften, Informationen, Suchhilfen, produktspezifische Beratungen und Informationen und ähnliches von der Verkaufsstätte auf das Smartphone oder Tablet kommuniziert werden kann, weshalb eine Halterung am Einkaufswagen besonders sinnvoll ist, damit der Kunde während des Einkaufs das Smartphone oder Tablet ständig im Blick und dabei die Hände frei haben kann. Für eine solche Anwendung ist es aber wichtig, eine Diebstahlsicherung vorzunehmen, die zumindest ausreicht, um ein schnelles Wegnehmen des Geräts in einem unbeobachteten Augenblick zu verhindern, wenn der Kunde sich gerade mit Waren im Regal beschäftigt.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Die erfindungsgemäße Klemmbackenhalter ist dazu mit einem Kombinationssperrmechanismus ausgestattet, wie er prinzipiell aus Zahlenschlössern bekannt ist, der die Auslösetaste sperrt und diese nur bei Einstellen der korrekten Kombination freigibt und deren Betätigung ermöglicht.

Die Erfindung wird nachstehend anhand eines Ausführungsbeispiels unter Bezugnahme auf die anliegenden Zeichnungen mehr im einzelnen beschrieben, in denen zeigt:
- Fig. 1: eine perspektivische Ansicht eines Halters nach der
- Fig. 2: Erfindung schräg von vorn, eine perspektivische Ansicht des Halters nach Fig. 1 schräg von hinten,
- Fig. 3: eine Frontansicht des Halters bei geschlossenen Backen,
- Fig. 4: eine Frontansicht des Halters bei geöffneten Backen,
- Fig. 5: einen Schnitt durch den Halter längs der Schnittlinie V-V in Fig. 3,
- Fig. 6: eine aufgeschnittene Frontansicht des Halters mit in der Sperrstellung befindlichen Sperrschieber, und
- Fig. 7: eine Ansicht ähnlich Fig. 6 mit in der Lösestellung befindlichem Sperrschieber.

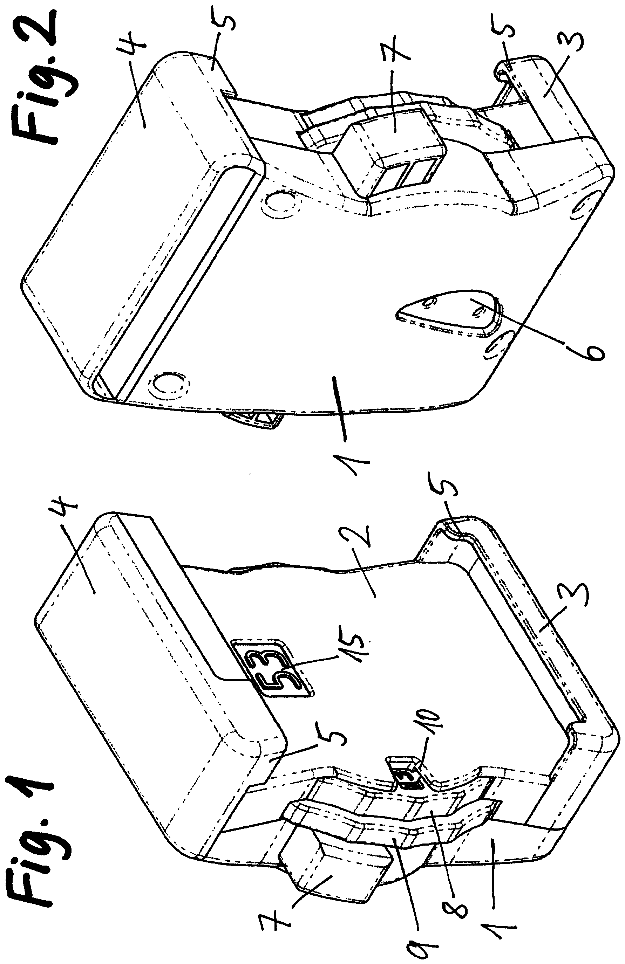

Die Fig. 1 und 2 zeigen jeweils in perspektivischer Ansicht schräg von vorn bzw. schräg von hinten einen Klemmbackenhalter nach der Erfindung, der mit einem Diebstahlschutz ausgestattet ist.

Der Klemmbackenhalter hat einen als Gehäuse zur Aufnahme des Betätigungsmechanismus ausgebildeten Korpus 1, dessen Frontwand eine Auflagefläche 2 für ein Smartphone oder Tablet bildet, und an dessen unterem Bereich eine feststehende Backe 3 angeordnet ist. Oben am Korpus ist eine bewegliche Backe 4 angeordnet.

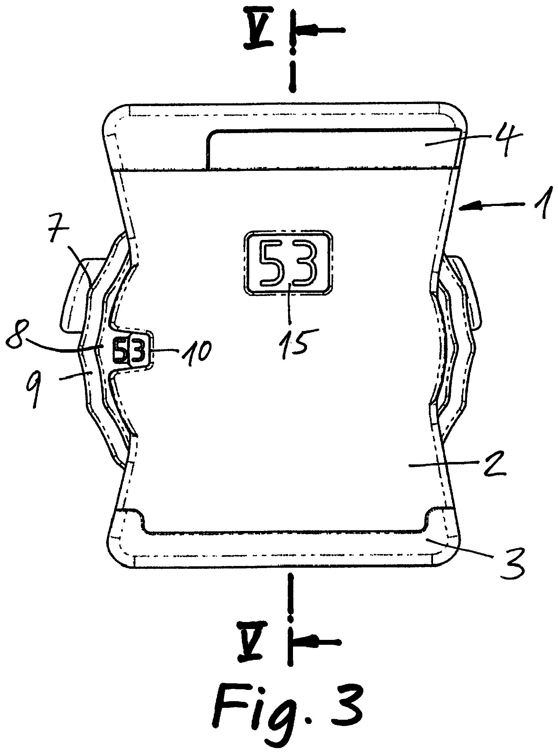

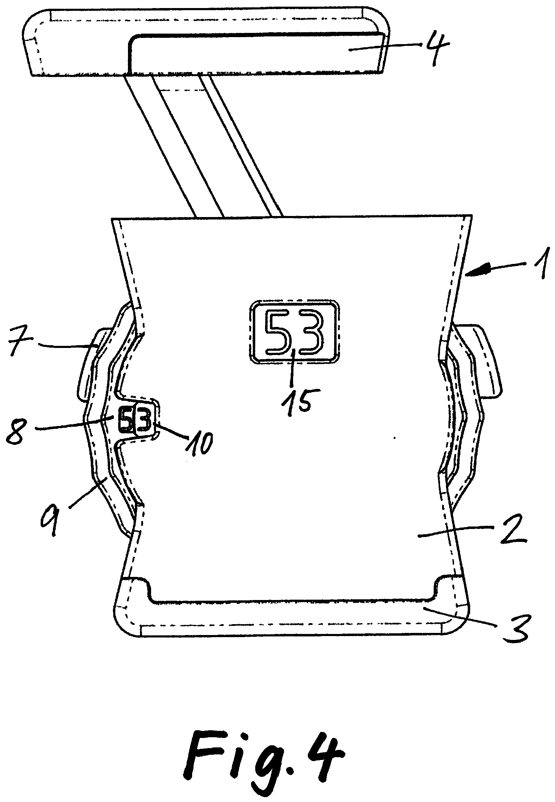

Die Fig. 1 und 2 und die den Halter in Frontansicht zeigende Fig. 3 zeigen den Halter jeweils im geschlossenen Zustand, also bei vollständig eingefahrener oberer Backe 4. Die den Halter ebenfalls in Frontansicht zeigende Fig. 4 zeigt den Halter bei vollständig ausgefahrener oberer Backe 4.

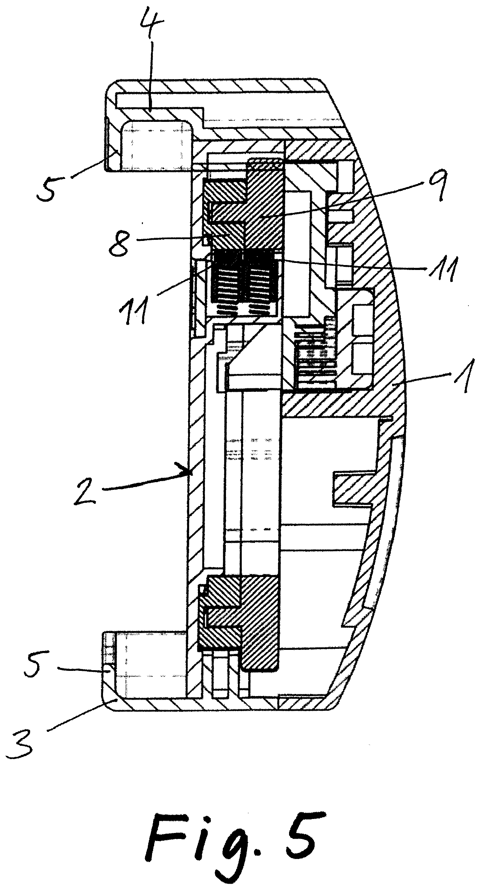

Wie man schon aus den perspektivischen Ansichten der Fig. 1 und 2 besonders bei der unteren Backe 3 und sehr deutlich in der Schnittdarstellung nach Fig. 5 erkennen kann, sind sowohl die untere Back 3 als auch die obere Backe 4 jeweils muldenförmig ausgebildet, um den unteren Randbereich und den oberen Randbereich des Smartphones oder Tablets aufzunehmen, und haben seitliche und frontseitige Randleisten 5, die einwärts gezogen sind, so dass sie bei eingelegtem Smartphone oder Tablet dessen oberen und unteren Bereich zusammen mit der Auflagefläche 2 allseitig umgreifen und damit bei geschlossenem Halter ein Herausnehmen des Smartphones oder Tablets aus dem Halter unmöglich machen.

Wie man in Fig. 2 erkennen kann, kann der Korpus 1 mit einem Anschluß 6 versehen sein, der beim Ausführungsbeispiel als Vertiefung zur formschlüssigen Aufnahme eines Gegenelements und mit Schraubenlöchern ausgebildet ist, um den Klemmbackenhalter an einer Tragvorrichtung beispielsweise an einem Einkaufswagen montieren zu können.

Der im Korpus 1 des Klemmbackenhalters untergebrachte Betätigungsmechanismus umfaßt einen üblichen Betätigungsmechanismus für die bewegliche obere Backe 4, der die obere Backe 4 federelastisch in seine in Fig. 4 dargestellte geöffnete Position vorspannt und ein Schließen der oberen Backe entgegen der Federvorspannung mit einem Ratschenmechanismus bis zur Anlage an ein eingelegtes Smartphone oder Tablet und das Halten in der jeweiligen Schließposition ermöglicht, und der mittels einer als Sperrschieber ausgebildeten Auslösetaste 7 entsperrbar ist, um die obere Backe 4 in ihre ausgefahrene Position zurückkehren zu lassen. Insoweit entspricht der Betätigungsmechanismus dem Stand der Technik und bedarf keiner weiteren Beschreibung.

Weiter umfaßt der Betätigungsmechanismus bei dem erfindungsgemäßen Klemmbackenhalter einen Kombinationssperrmechanismus, der im folgenden insbesondere unter Bezugnahme auf die Fig. 5 bis 7 im einzelnen beschrieben wird. Fig. 5 zeigt einen Schnitt entlang der Schnittlinie V-V in Fig. 3, und die Fig. 6 und 7 zeigen jeweils eine aufgeschnittene Frontansicht des Halters ohne die die Auflagefläche 2 bildende Frontwand und ohne das vordere Stellrad 8, so dass nur das hintere Stellrad 9 und dessen Zusammenwirken mit dem Sperrschieber 7 sichtbar ist.

Der Kombinationssperrmechanismus folgt dem generellen Prinzip üblicher Zahlenschlösser und weist beim dargestellten Ausführungsbeispiel zwei scheibenförmige Stellräder 8 und 9 auf, nämlich ein vorderes Stellrad 8 und ein hinteres Stellrad 9, die aufeinanderliegend und konzentrisch angeordnet sind und von denen das vordere Stellrad 8 einen etwas kleineren Durchmesser hat als das hintere Stellrad 9, so dass sich eine Durchmesserstaffelung ergibt, die von der Frontseite des Halters her beide Stellräder 8 und 9 leicht erkennbar und jeweils gesondert betätigbar macht. Beide Stellräder 8 und 9 haben, wie aus den Fig. 1 bis 4 ersichtlich ist, einen mit Griffmulden profilierten Rand, um die Stellräder mit den Fingern leicht ergreifen zu können. Beide Stellräder 8 und 9 ragen beiderseits etwas über den Korpus 1 oder jedenfalls die Auflagefläche 2 hinaus, um sie leicht ergreifen zu können. Außerdem greift das hinterliegende Stellrad 9 mit einem frontseitig angeformten Ring in eine entsprechende Nut des vorne liegenden Stellrads 8 ein, so dass die beiden Stellräder 8 und 9 relativ zueinander zentriert sind.

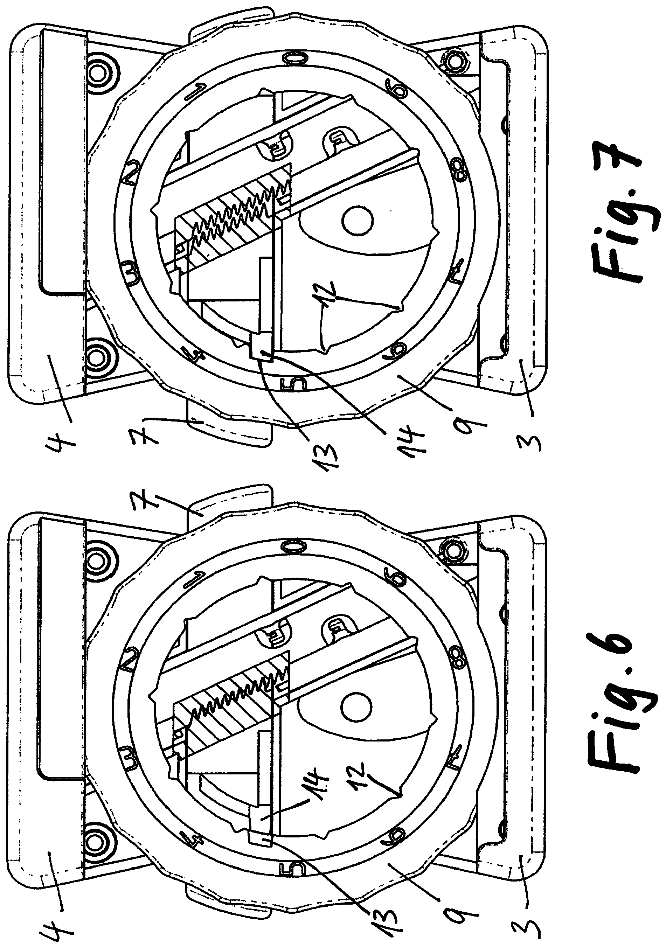

Die beiden Stellräder 8 und 9 haben jeweils eine Anzahl definierter Drehpositionen, die jeweils mit einer vorderseitig am jeweiligen Stellrad angebrachten und für den Benutzer sichtbaren Bezeichnung versehen sind. Beim vorliegenden Ausführungsbeispiel sind es für jedes Stellrad zehn Positionen mit durch die Ziffern 0 bis 9 gebildeten Bezeichnungen. Diese sind in einem Fenster 10 der Auflagefläche 2 nebeneinander sichtbar, die als seitliche Einbuchtung ausgebildet ist. In dem Fenster 10 sind nebeneinander die jeweiligen Einstellpositionen der beiden Stellräder 8 und 9 sichtbar, hier die Position "5" des einen Stellrads und die Position "3" des anderen Stellrads, also die Einstellkombination "53". Die jeweiligen Einstellpositionen werden jeweils durch einen im Schnitt nach Fig. 5 sichtbaren, jedem Stellrad 8 und 9 zugeordneten und federnd gegen dessen Innenumfang vorgespannten Rastkörper 11 und am Innenumfang jedes Stellrads angeordnete, in den Fig. 6 und 7 sichtbare, als Einbuchtungen ausgebildete Rastöffnungen 12 definiert, in welche der Rastkörper 11 in der jeweils eingestellten Position einrastet.

Außerdem weisen die beiden Stellräder 8 und 9, wie aus den Fig. 6 und 7 erkennbar ist, an ihrem Innenumfang jeweils eine Schlüsselöffnung 13 auf, in welche eine Schlüsselnase 14 des Sperrschiebers 7 eingreifen kann, wenn das jeweilige Stellrad sich in der das Öffnen der beweglichen Backe 4 ermöglichenden Drehstellung befindet. Fig. 6 zeigt den Mechanismus bei in der Sperrstellung befindlichen Sperrschieber, aber bereits in die das Betätigen des Sperrschiebers 7 in die Freigabestellung ermöglichenden Position des hinteren Stellrads 9, wo Schlüsselöffnung 13 und Schlüsselnase 14 miteinander fluchten. Fig. 7 zeigt einen Mechanismus bei in die Freigabestellung verschobenem Sperrschieber 7, wo die Schlüsselnase 14 in die Schlüsselöffnung 13 eintaucht und die bewegliche Backe 4 (noch im geschlossenen Zustand dargestellt) in die geöffnete Stellung ausfahren kann.

Beim dargestellten Ausführungsbeispiel sind der Einfachheit halber für jedes Stellrad 8 und 9 zehn mögliche Drehpositionen mit den Bezeichnungen jeweils durch die Ziffern 0 bis 9 vorgesehen. Damit ergeben sich bei zwei Stellrädern 8 und 9 hundert mögliche einstellbare Kombinationen. Es versteht sich, dass abweichend vom dargestellten Ausführungsbeispiel auch andere Anzahlen von möglichen Drehpositionen jedes Stellrads möglich sind, insbesondere auch Anzahlen von mehr als zehn, und als Bezeichnung der jeweiligen Drehpositionen können auch Buchstaben dienen. Größere Anzahlen von einstellbaren Drehpositionen jedes Stellrads bieten sich an, wenn der Durchmesser und somit der Umfang jedes Stellrads dafür ausreichend groß ist, und je größer die Anzahl der einstellbaren Drehpositionen jedes Stellrads ist, desto größer ist die Anzahl der sich ergebenden möglichen Einstellkombinationen. Dabei können die Anzahlen der einstellbaren Drehpositionen bei den beiden Stellrädern auch unterschiedlich groß sein. Weiter ist es natürlich auch möglich, noch ein drittes Stellrad zu verwenden und dadurch die Anzahl der möglichen Kombinationen stark zu erhöhen, was allerdings eine entsprechend große Bautiefe des Korpus 1 erfordert.

Grundsätzlich ist auch die Verwendung nur eines Stellrads möglich, wobei aber nur eine entsprechend niedrige Zahl von Einstellmöglichkeiten realisiert werden kann. Statt Stellrädern könnten auch andere Einstellorgane mit gleicher Funktion eingesetzt werden.

Um Halter mit jeweils einer bestimmten Kombination aus der verfügbaren Anzahl möglicher Kombinationen herstellen zu können, genügt es, bei jeweils gleich gefertigten Stellrädern 8 und 9 nur den Kranz der aufzubringenden Kombinationsbezeichnungen relativ zur Schlüsselöffnung in unterschiedlichen Drehpositionen aufzubringen und aus den so beim Ausführungsbeispiel möglichen zehn verschiedenen vorderen Stellrädern 8 und den zehn verschiedenen hinteren Stellrädern 9 verschiedene Kombinationen zusammenzustellen. Die für jeden Halter gültige Kombination kann, wie in den Zeichnungen dargestellt ist, auf der Auflagefläche 2 in Gestalt einer Beschriftung 15 angebracht werden, die für den Benutzer sichtbar ist, aber bei aufgelegtem Smartphone oder Tablet verdeckt und damit für andere nicht sichtbar ist. Nach dem Auflegen des Smartphones oder Tablets und Schließen der beweglichen Backe 4 werden die Stellräder 8 und 9 verdreht, so dass der Halter bei geschlossenen Backen gesperrt und das darin aufgenommene Smartphone oder Tablet diebstahlgesichert ist.

## Patentansprüche

1. Klemmbackenhalter für Smartphones oder Tablets, mit einem eine Auflagefläche (2) für das Smartphone oder Tablet bildenden und einen Betätigungsmechanimus aufnehmenden Korpus (1) und zwei das Smartphone oder Tablet an zwei gegenüberliegenden Randbereichen ergreifenden Backen (3, 4), von denen mindestens eine Backe (4) zwischen einer Offenstellung und einer variablen Schließstellung beweglich und in der Schließstellung arretierbar ist, und mit einer Auslösetaste (7) zum Entsperren der Arretierung der mindestens einen beweglichen Backe (4) in deren Schließstellung,
**dadurch gekennzeichnet, dass**
die beiden Backen (3, 4) mit dem jeweiligen Randbereich des Smartphones oder Tablets übergreifenden Randelementen (5) zur formschlüssigen Aufnahme des jeweiligen Randbereichs ausgebildet sind,
und dass mindestens ein Stellelement (8, 9) vorgesehen ist, das zwischen einer Mehrzahl definierter und mit Markierungen versehener Positionen verstellbar ist und mit einem Schlüsselelement (13) ausgebildet ist, das nur in einer bestimmten Position der Mehrzahl von einstellbaren Positionen mit einem komplementären Schlüsselelement (14) der Auslösetaste (7) zusammenwirken kann, um nur in dieser bestimmten Position eine Betätigung der Auslösetaste in deren Lösestellung zu ermöglichen und in allen anderen Positionen deren Betätigung zu sperren.

2. Klemmbackenhalter nach Anspruch 1, wobei mindestens zwei Stellelemente (8, 9) vorgesehen sind.

3. Klemmbackenhalter nach Anspruch 1 oder 2, wobei das mindestens eine Stellelement (8,9) als Stellrad ausgebildet ist, das an mindestens einer Seite des Korpus (1) aus diesem herausragt.

4. Klemmbackenhalter nach Anspruch 2, wobei die mindestens zwei Stellelemente (8, 9) durch konzentrisch und axial hintereinander angeordnete Stellräder gebildet sind, die auf mindestens einer Seite des Korpus (1) aus diesem herausragen.

5. Klemmbackenhalter nach Anspruch 4, wobei von den mindestens zwei Stellräder (8, 9) das hintere Stellrad (9) einen etwas größeren Durchmesser als das vordere Stellrad (8) hat.

6. Klemmbackenhalter nach einem der Ansprüche 3 bis 5, wobei das Schlüsselelement (13) in Gestalt einer Schlüsselöffnung am Innenumfang des oder jedes Stellrads (8, 9) ausgebildet ist, in welche eine mit der Auslösetaste (7) verbundene Schlüsselnase (14) eintauchen kann.
